# FASCICULE DE BREVET EUROPEEN

(11) **EP 2 406 194 B1**
(45) Date de publication et mention de la délivrance du brevet: **16.05.2018**
(21) Numéro de dépôt: 10714938.7
(22) Date de dépôt: 10.03.2010
(51) Int. Cl.: C03C 1/00, C03C 17/00, C03C 17/02

(54) **VITRAGE A COUCHE SOL-GEL A PROPRIETES AMELIOREES**
GLASPLATTE MIT SOL-GEL-SCHICHT MIT VERBESSERTEN EIGENSCHAFTEN
GLASS SHEET HAVING A SOL-GEL LAYER WITH IMPROVED PROPERTIES

(30) Priorité: 11.03.2009 FR 0951508
(43) Date de publication de la demande: 18.01.2012
(73) Titulaire: Saint-Gobain Glass France, 92400 Courbevoie (FR)
(72) Inventeur: KAMP, Hanno, F-75016 Paris (FR); GOLETTO, Valérie, F-75013 Paris (FR); CHANEAC, Corinne, F-93170 Bagnolet (FR); JOLIVET, Jean-Pierre, F-91640 Vaugrigneuse (FR); CASSAIGNON, Sophie, F-92160 Antony (FR)
(74) Mandataire: Saint-Gobain Recherche
(86) Numéro de dépôt international: PCT/FR2010/050408
(87) Numéro de publication internationale: WO 2010/103236

(56) Documents cités:
- EP-A- 1 293 488
- US-A- 6 030 599
- JANACKOVIC ET AL: "Synthesis and formation mechanism of submicrometre spherical cordierite powders by ultrasonic spray pyrolysis" JOURNAL OF MATERIALS SCIENCE, 1997, pages 163-168, XP002553165

## Description

La présente invention est relative aux méthodes de dépôt de couches minces formées par voie liquide, également appelée sol-gel, sur des substrats verriers ou analogues, notamment transparents et de surface uniforme, devant présenter la qualité optique élevée d'un vitrage par exemple.

Les termes « couche mince » désignent ici une épaisseur de l'ordre de 10 nm à 100 µm au plus, notamment à 1 µm au plus.

La qualité optique requise de l'ensemble substrat-couche nécessite une couche d'épaisseur uniforme, exempte de toute irrégularité de surface, craquelure ..., homogène en composition et transparente.

On recherche aussi principalement une bonne adhésion de la couche sur le substrat, ainsi que de bonnes propriétés mécaniques : résistance aux rayures, à l'abrasion, à la friction ...

A l'heure actuelle, le procédé sol-gel couramment employé pour réaliser de tels dépôts sur divers substrats plans ou de formes complexes (verre, plastique, céramique) utilise des précurseurs de type alcoxydes métalliques en solvant hydroalcoolique.

Ces précurseurs sont coûteux.

De plus, l'utilisation d'alcool limite les applications, et l'élimination d'alcool requiert plus de précautions que l'élimination d'eau.

D'autre part, des compositions mixtes homogènes, autres que résultant d'un dopage, telles que Si/Al, Si/Zr... sont difficilement réalisables compte tenu de la différence de réactivité des alcoxydes. Il est nécessaire d'utiliser des chélatants organiques pour niveler ces réactivités. Ces composés organiques doivent ensuite être éliminés pour obtenir des couches purement minérales. Il est alors difficile d'obtenir des couches denses car l'élimination des composés organiques par traitement thermique introduit de la porosité dans la couche. Le document EP 1293488 décrit une méthode de dépôt de couche sol-gel utilisant une solution aqueuse d'acide silicique en milieu basique. Les inventeurs ont maintenant élaboré un procédé de formation de couches transparentes uniformes à bonne adhésion sur un substrat, de compositions variées : Si, Si/Al, Si/Zr, Si/Ti ..., et à partir de précurseurs peu coûteux (silicate, sels métalliques) en solvant 100 % aqueux. Aucun traitement de déchets organiques n'est nécessaire.

A cet effet, l'invention a pour objet un procédé de dépôt par voie liquide d'une couche sur un substrat, cette couche étant formée en milieu acide à partir d'une solution aqueuse d'acide silicique exempte de solvant non aqueux.

Ce procédé est d'une réalisation aisée. Il permet d'obtenir des couches aux qualités mentionnées ci-dessus, et notamment transparentes d'épaisseurs uniformes, haute qualité optique, exemptes de défauts ou irrégularités de surface telles que craquelures ou analogues. Ces couches ont une excellente adhésion au substrat et ne présentent aucune tendance à se décoller du substrat, s'écailler, se délaminer ...

Selon d'autres caractéristiques du procédé de l'invention :
- un composé d'un métal autre que l'acide silicique - notamment un composé d'Al, Zr ou Ti - est dissous dans ladite solution aqueuse ;
- le procédé comprend une opération consistant à incorporer dans ladite solution aqueuse une poudre, respectivement une suspension d'un composé d'un métal autre que l'acide silicique ;
- il comprend un traitement thermique destiné à évaporer l'eau de la couche et cuire la couche qui se contracte et se densifie.

L'invention est maintenant illustrée par les exemples suivants.

### Exemple 1

Cet exemple décrit les produits de départ, leur préparation.
- Substrat
   On utilise en général des substrats de verre Planilux de Saint-Gobain d'une épaisseur de 2 mm. Ils sont préalablement traités avec une suspension d'oxyde de cérium afin de rendre la surface hydrophile. Puis ils sont nettoyés à l'eau du robinet, puis à l'eau distillée ensuite à l'éthanol avant d'être séchés à l'air comprimé.
- Acide silicique
   400 ml d'une solution de silicate de sodium à 1 mol/l dans l'eau sont passés sur une colonne Amberlite IRN 77 (Rohm & Haas) préalablement acidifiée (HCl, 3 mol/l).
   L'acide récupéré a un pH de 3 (+/- 0,2). La gravimétrie révèle une teneur en silice de 1 mol/l.
   Comme l'acide silicique polymérise pour donner l'acide polysilicique, la solution devient de plus en plus visqueuse au cours du temps. La vitesse de polymérisation dépend de la température et du pH. Elle a un minimum à pH 1,5.
   En-dessous de pH 3, les polymères formés sont plutôt linéaires et transparents, alors qu'au-dessus de cette valeur limite, on retrouve des polymères ramifiés, sous forme de billes ou noeuds.
- Boehmite
   Une solution de nitrate d'aluminium à 0,1 mol/l dans l'eau est neutralisée avec NaOH à 1 mol/l dans l'eau à pH compris entre 7 et 9. Ensuite, la suspension est murie pendant une semaine à 95°C. La suspension est alors centrifugée (1 h à 20000 tr/min), lavée, recentrifugée (1 h à 20000 tr/min) et séchée sous flux d'azote pendant 48 h. On obtient des nanoparticules de boehmite Al OOH de taille comprise entre 10 et 25 nm.
- Zircone
   Une solution d'oxychlorure de zirconium à 0,1 mol/l dans l'eau est mise à murir à 95°C pendant une semaine. On obtient un précipité blanc. La suspension est centrifugée (1 h à 20000 tr/min), lavée, recentrifugée (1 h à 20000 tr/min) et séchée sous flux d'azote pendant 48 h. On obtient des nanoparticules de baddeléyite de taille comprise entre 100 et 120 nm.

### Exemple 2 : élaboration d'une couche Si/Al par voie boehmite

### a) Monocouche

On mélange une solution d'acide silicique avec une poudre de boehmite, toutes deux préparées comme décrit ci-dessus. Le rapport molaire boehmite : acide silicique Si(OH)₄ est de 0,2, la concentration de l'acide de 1 mol/l, et l'âge de l'acide est de 7 jours à pH 1,5 et 1°C.

La dispersion se fait par traitement ultrasons jusqu'à ce qu'il y ait un liquide homogène légèrement trouble sans grumeaux de poudre apparente.

Ensuite la couche est déposée sur un substrat de verre commercialisé par le groupe Saint-Gobain sous la marque Planilux, de 2 mm d'épaisseur, par spin-coating (tournette) à une vitesse de 2000 tr/min. On effectue un traitement thermique avec rampe de 5°C/min et palier à 500°C pendant 45 min.

On obtient une couche de 81 nm d'épaisseur et d'indice de réfraction 1,412.

### b) Bicouche

On reproduit la partie a) de cet exemple, en effectuant deux dépôts consécutifs, avec 5 min de repos à l'air libre et température ambiante entre les dépôts.

L'épaisseur de la couche est de 190 nm, son indice de réfraction de 1,418.

L'analyse par MEB, DRX et RMN de ²⁷Al des couches obtenues en a) et b) de cet exemple indique la présence de nanoparticules cristallines d'alumine dans une matrice vitreuse continue de silice.

### Exemple 3 : élaboration d'une couche Si/Al par voie nitrate

On mélange l'acide silicique préparé comme décrit ci-dessus avec une solution d'Al(NO₃)₃ de la même concentration (1 mol/l dans l'eau).

Les quantités respectives introduites sont choisies pour obtenir un rapport molaire Al(NO₃)₃ : Si(OH)₄ de 0,5.

L'âge de l'acide est de 2 jours à pH 2,8 et 1°C.

La couche est alors déposée sur un substrat de verre commercialisé par le groupe Saint-Gobain sous la marque Planilux, de 2 mm d'épaisseur, par spin-coating à une vitesse de 2000 tr/min.

Le traitement thermique est le même qu'à l'exemple 2.

On obtient une couche de 100 nm d'épaisseur et d'indice de réfraction 1,502, dont l'analyse par MEB, DRX et RMN de ²⁹Si indique un réseau continu d'aluminosilicate vitreux.

Les couches obtenues aux exemples 2 et 3 sont transparentes et uniformes. En microscopie optique on ne voit aucune craquelure.

### Exemple 4 : élaboration d'une couche Si/Zr par voie « incorporation de poudre »

On mélange une solution d'acide silicique préparée comme décrit ci-dessus avec une poudre de zircone. La dispersion se fait par traitement ultrasons jusqu'à ce qu'il y ait un liquide homogène légèrement trouble sans grumeaux de poudre apparents. Ensuite la couche est déposée par spin-coating (2000 tr/min). Comparé à la boehmite, on est beaucoup plus limité en teneur en poudre, la limite se situe à 10 % molaire.

### Exemple 5 : élaboration d'une couche Si/Zr par voie « incorporation de suspension »

On mélange une solution d'acide silicique préparée comme décrit ci-dessus avec une suspension de zircone telle quelle avant centrifugation. Une redispersion est donc inutile. La taille des particules présentes dans la couche peut donc être gouvernée par l'âge de la dispersion. Par cette méthode, il est possible même d'incorporer des particules tellement fines qu'une centrifugation est impossible.

## Revendications

1. Procédé de dépôt par voie liquide d'une couche sur un substrat, **caractérisé en ce que** la couche est formée en milieu acide à partir d'une solution aqueuse d'acide silicique exempte de solvant non aqueux, a une épaisseur de 10 nm à 100 µm, est transparente et d'épaisseur uniforme.

2. Procédé selon la revendication 1, **caractérisé en ce qu'**un composé d'un métal autre que l'acide silicique est dissous dans ladite solution aqueuse.

3. Procédé selon la revendication 1 ou 2, **caractérisé en ce qu'**il comprend une opération consistant à incorporer dans ladite solution aqueuse une poudre d'un composé d'un métal autre que l'acide silicique.

4. Procédé selon l'une des revendications précédentes, **caractérisé en ce qu'**il comprend une opération consistant à incorporer dans ladite solution aqueuse une suspension d'un composé d'un métal autre que l'acide silicique.

5. Procédé selon l'une des revendications précédentes, **caractérisé en ce qu'**il comprend un traitement thermique.

## Patentansprüche

1. Verfahren zum Aufbringen auf flüssigem Weg einer Schicht auf ein Substrat, **dadurch gekennzeichnet, dass** die Schicht in saurem Milieu aus einer wässrigen Kieselsäurelösung frei von nicht wässrigem Lösungsmittel gebildet wird, eine Stärke von 10 nm bis 100 µm hat, transparent und gleichmäßiger Stärke ist.

2. Verfahren nach Anspruch 1, **dadurch gekennzeichnet, dass** eine Verbindung eines Metalls, die keine Kieselsäure ist, in der wässrigen Lösung gelöst wird.

3. Verfahren nach Anspruch 1 oder 2, **dadurch gekennzeichnet, dass** es einen Vorgang umfasst, der darin besteht, in die wässrige Lösung ein Pulver einer Verbindung eines Metalls einzuarbeiten, die keine Kieselsäure ist.

4. Verfahren nach einem der vorangehenden Ansprüche, **dadurch gekennzeichnet, dass** es einen Vorgang umfasst, der darin besteht, in die wässrige Lösung eine Suspension einer Verbindung eines Metalls einzuarbeiten, die keine Kieselsäure ist.

5. Verfahren nach einem der vorangehenden Ansprüche, **dadurch gekennzeichnet, dass** es eine thermische Behandlung umfasst.

## Claims

1. The method for liquid deposition of a layer onto a substrate, **characterised in that** the layer is formed in an acid medium from a silicic acid aqueous solution that is free of non-aqueous solvent, has a thickness of 10 nm to 100 µm, is transparent and of uniform thickness.

2. The method according to claim 1, **characterised in that** a metal compound other than silicic acid is dissolved in said aqueous solution.

3. The method according to claim 1 or 2, **characterised in that** it comprises an operation consisting of incorporating into said aqueous solution a powder of a metal compound other than silicic acid.

4. The method according to any one of the preceding claims, **characterised in that** it comprises an operation consisting of incorporating into said aqueous solution a suspension of a metal compound other than silicic acid.

5. The method according to any one of the preceding claims, **characterised in that** it comprises a heat treatment.
